# EUROPEAN PATENT SPECIFICATION

(11) **EP 3 097 772 B1**
(45) Date of publication and mention of the grant of the patent: **31.01.2018**
(21) Application number: 16159112.8
(22) Date of filing: 08.03.2016
(51) Int. Cl.: A01G 23/081, F15B 1/26, F15B 21/00

(54) **VARIABLE VOLUME COMPENSATION TANK FOR A HYDRAULIC MOTOR, FOR RECEIVING OVERFLOW OIL**
AUSGLEICHTANK MIT VARIABLEM VOLUMEN FÜR EINEN HYDRAULISCHEN MOTOR, ZUR AUFNAHME DES ÖLS IN ÜBERFLUSS
RÉSERVOIR DE COMPENSATION À VOLUME VARIABLE POUR UN MOTEUR HYDRAULIQUE, POUR ABSORBER UN TROP-PLEIN D'HUILE

(30) Priority: 26.05.2015 FI 20155396
(43) Date of publication of application: 30.11.2016
(73) Proprietor: Biojack Oy, 25500 Perniö (FI)
(72) Inventor: Asikainen, Janne, 24100 Salo (FI); Asikainen, Unto, 25520 Perniö As (FI)
(74) Representative: Genip Oy

(56) References cited:
- EP-A2- 0 298 635
- WO-A1-2011/078673
- CA-A1- 2 650 748
- DE-A1-102007 034 315

## Description

### Field of invention

The invention is related to hydraulic apparatuses and to work devices usable with pressure circulation and equipped with a hydraulic motor.

### Technical background

International patent application publication WO 2011/078673 A1 discloses a hydraulic system of a harvester equipped with a pressure accumulator, where the overflow oil of a high-speed hydraulic motor of a chain saw of a device operated by a work machine is led into the pressure accumulator, into which the hydraulic oil is stored and from which it is later led back to the hydraulic system. The pressure accumulator causes a counterpressure in the overflow pipe of the hydraulic motor, which counterpressure may shorten the service life of the hydraulic motor or even break it.

### Objective of invention

The objective of the invention is to reduce the breakdown of work devices usable with pressure circulation and equipped with a hydraulic motor. This objective can be solved by means of a work device according to claim 1, usable with pressure circulation and equipped with a hydraulic motor.
The dependent claims describe the advantageous aspects of the hydraulic apparatus.

### Advantages of invention

A work device usable with pressure circulation and equipped with a hydraulic motor comprises i) a hydraulic circulation, which has a first pressure line and a second pressure line, ii) a hydraulic motor connected between the first pressure line and the second pressure line and which has an overflow connection, and iii) a hydraulic apparatus for the receiving and returning to pressure circulation of the overflow oil of the hydraulic motor comprising i) a tank section, which comprises an air-tight liquid space which is in connection with at least one connector, the volume of which liquid space is restricted by at least one movable wall, and ii) a drainage section, which has been configured in a first operating stage to accomplish a reduction in the volume of the liquid space by moving the wall and in a second operating stage to release the wall to enable an increase in the volume of the liquid space, and when in addition to this the hydraulic apparatus has in the first operating stage been arranged to return overflow oil to the hydraulic circulation through a non-return valve and in the second operating stage to receive overflow oil from the hydraulic motor through a second non-return valve.
The hydraulic apparatus has furthermore been configured to receive overflow oil from the hydraulic motor through a non-return valve and to return the overflow oil to the pressure circulation through a second non-return valve, it is possible to reduce the breakdown of the work device, because it is possible to reduce the strain exerted on the hydraulic motor by means of the hydraulic apparatus especially by reducing the counterpressure of the receiving of the overflow oil. In other words, it is possible to improve the service life of the hydraulic motor, which preferably is a hydraulically-operated high-speed motor.
When the drainage section of the hydraulic apparatus comprises a cylindrical shell and ends at both heads of the shell, the drainage section is machinable in a relatively simple manner. It can advantageously be implemented as a welded structure.
When the drainage section of the hydraulic apparatus comprises a movable piston and piston rod between the ends inside the cylindrical shell, it is possible to implement the double-acting drainage section in a relatively simple manner.
When the drainage section of the hydraulic apparatus comprises a connector, which has been connected or is connectable to the hydraulic circulation to allow the moving of the wall, enabling an increase in the volume of the liquid space, especially by pushing the movable piston and/or piston rod to avoid the movement of the wall, it is possible for the tank section of the hydraulic apparatus to be released to receive the overflow oil of the hydraulic motor.

When the drainage section of the hydraulic apparatus comprises a connector, which has been connected or is connectable to the hydraulic circulation to accomplish a reduction in the volume of the liquid space by moving the wall, especially by pushing it with the piston and/or piston rod, it is possible for the hydraulic apparatus to return the overflow oil from the tank section back to the hydraulic circulation.

When the tank section of the hydraulic apparatus comprises at least one connector, which has/have been connected or is/are connectable to the hydraulic circulation in the first operating stage to return overflow oil to the pressure circulation through a non-return valve and in the second operating stage to receive overflow oil from the hydraulic motor through a second non-return valve, it is possible to reduce the number of connectors of the tank section.

When the tank section of the hydraulic apparatus comprises an air opening to make the counterpressure of the wall constant, as the wall is moving and as the liquid space is growing in size, it is possible for air to exit the gas space which is reducing in size and, correspondingly, as the liquid space is reducing in size, it is possible for air to come into the expanding gas space. In this way, it is possible to keep the counterpressure of the gas space constant and even as small as possible.

When the first pressure line and the second pressure line of the work device have been connected or are connectable to a hydraulic power unit, it is possible to produce the hydraulic energy required by the hydraulic motor and other actuators outside the work device.

The work device advantageously comprises a number of grabs and at least one hydraulic cylinder, which has been connected or is connectable to one of the pressure lines to close the grabs and to the other pressure line to open the grabs, it is possible to receive the overflow oil from the hydraulic motor and to return it to the pressure line without an extra pressure line only used for the hydraulic cylinder, and in this way it is possible to completely avoid the use of a specific hydraulic circulation required by the hydraulic apparatus with separate pressure lines.

The work device most advantageously comprises a body and at least one hydraulic cylinder, which has been connected or is connectable to the first pressure line to turn the body with respect to the arm to the first position, especially essentially to an angle of 0°, and to the second pressure line to turn the body with respect to the boom to the second position, especially essentially to an angle of 90°, it is possible for the work device to grab items that are in different positions, for example tree trunks that are in different positions.

When the hydraulic motor of the work device is the motor of a hydraulically-operated chain saw, and when the work device further comprises a hydraulic cylinder, which has been connected or is connectable to the first pressure line to turn the chain saw to the cutting position and to the second pressure line to return the chain saw to the rest position, it is possible to receive the overflow oil from the hydraulic motor of the chain saw and to return the overflow oil to the pressure line without an extra pressure line only used for the hydraulic cylinder, and in this way it is possible to completely avoid the use of a specific hydraulic circulation required by the hydraulic motor of the chain saw with separate pressure lines.

Most advantageously, the work device is a hydraulically-operated gripping device or grab intended for the collection and cutting of timber, and the hydraulic motor is the motor of a hydraulically-operated chain saw. In this case, it is possible to use the hydraulic apparatus to receive the overflow oil of the motor of the chain saw and to return the overflow oil to the pressure circulation and in this way reduce the breakdown of the hydraulic motor by decreasing the strain exerted on it by the counterpressure.

When the second operating stage of the hydraulic apparatus of the work device is when the motor of the chain saw is rotating, it is possible to receive the overflow oil coming from the motor of the chain saw to the hydraulic apparatus, which, due to the manner of implementation of the hydraulic apparatus, enables a small counterpressure from the direction of the hydraulic apparatus in so far as the pressure of the overflow oil only needs to move the wall. Depending on the manner of implementation, it is possible to prevent the need for a high overflow oil pressure in this way. A chain saw motor tested by us broke down when the counterpressure was more than 2 bar. Depending on the manner of implementation, the hydraulic apparatus can as a rule be essentially in the vertical position in its longitudinal direction, in which case also the wall tends to come down by gravitational force alone, at least partially, which for its part decreases the necessary pressure of the overflow oil.

When the first operating stage of the hydraulic apparatus of the work device is when the gripping device or grab is being opened, in which case the hydraulic motor of the chain saw is not run, it is possible for the hydraulic apparatus to return the overflow oil of the hydraulic motor to the pressure circulation at a stage where no overflow oil is coming from the hydraulic motor. In this way, it is possible to better prevent the breakdown of the hydraulic motor.

### List of drawings

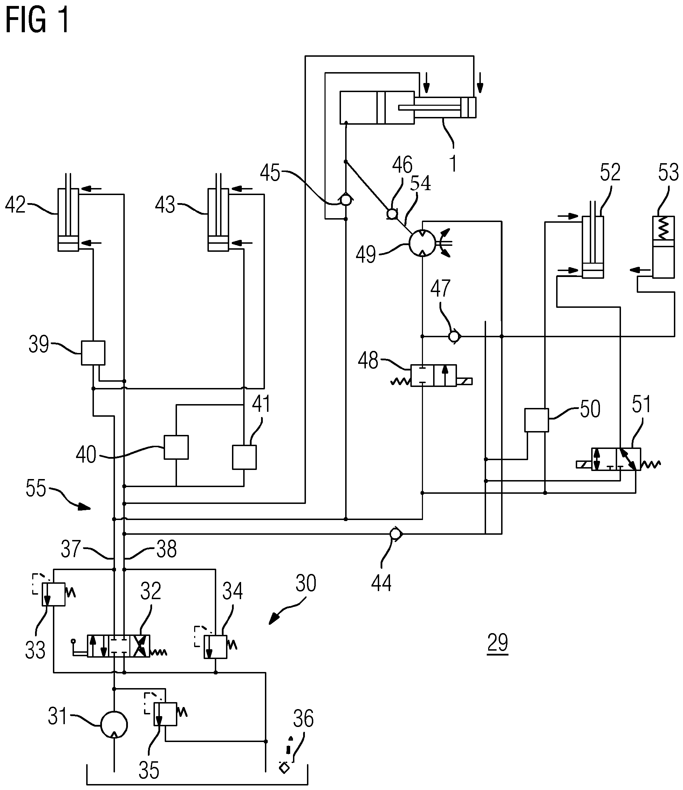

In what follows, the hydraulic apparatus for the receiving and returning to the pressure circulation of the overflow oil of a hydraulic motor, and the work device usable with pressure circulation and equipped with a hydraulic motor are presented in more detail by means of the application example of a saw grab presented in the enclosed drawings FIG 1 - 12. Of the drawings:
- FIG 1: shows the hydraulic diagram of a work device (saw grab) usable with pressure circulation and equipped with a hydraulic motor, which also comprises a hydraulic apparatus for the receiving and returning to the pressure circulation of the overflow oil of the hydraulic motor;
- FIG 2: shows cross-section II - II of a hydraulic apparatus installed in the saw grab presented in FIG 4;
- FIG 3: shows a perspective view of the saw grab diagonally from the back from above;
- FIG 4: shows a view from the back of the saw grab;
- FIG 5: shows a view from the front of the saw grab;
- FIG 6: shows a view from the right side of the saw grab;
- FIG 7: shows a view from the left side of the saw grab;
- FIG 8: shows a view from above the saw grab;
- FIG 9: shows a view from below the saw grab;
- FIG 10: shows cross-section II - II of the hydraulic apparatus shown in FIG 2 in a situation where the liquid space of the tank section has become empty of overflow oil;
- FIG 11: shows cross-section II - II of the hydraulic apparatus shown in FIG 2 in a situation where the liquid space of the tank section has filled with overflow oil; and
- FIG 12: shows cross-section II - II of the hydraulic apparatus shown in FIG 2 in a situation where the liquid space of the tank section is filling.

The same reference numbers refer to the same technical characteristics in all drawings.

### Detailed description of the invention

### I: hydraulic apparatus

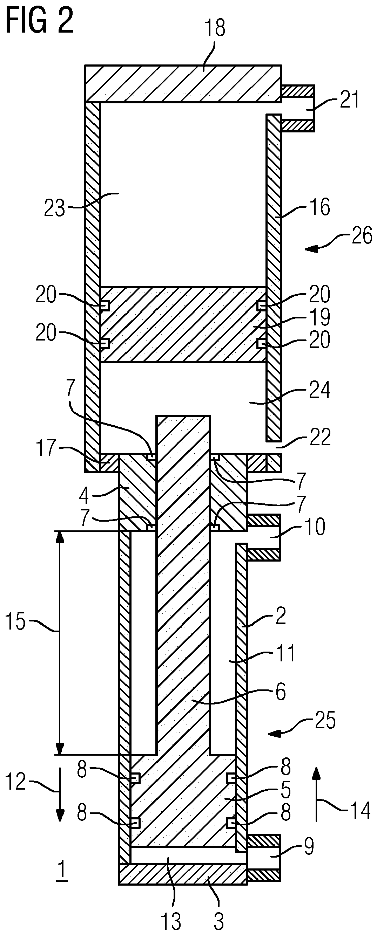

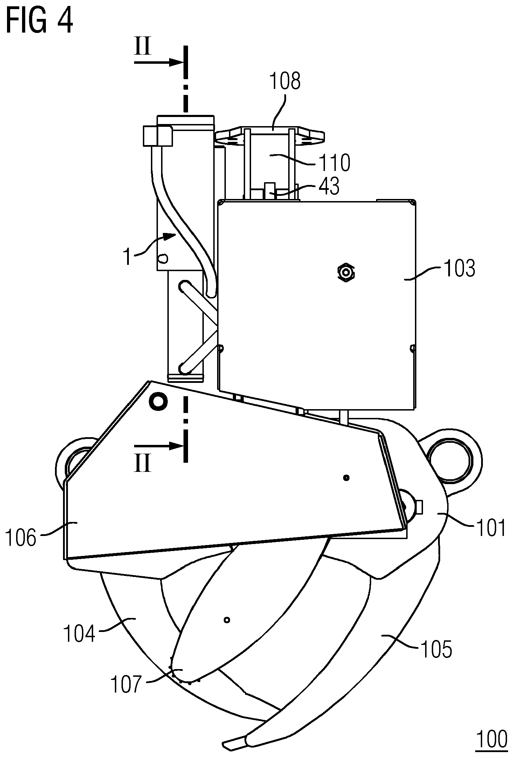

FIG 2 shows cross-section II - II (cf. FIG 4) of a hydraulic apparatus 1 for the receiving of the overflow oil of a hydraulic motor and for returning the overflow oil to the pressure circulation. The hydraulic apparatus 1 comprises a tank section 26, which comprises an air-tight liquid space 23 that is in connection with at least one connector 21, the volume of which liquid space 23 is restricted by at least one movable wall 19. The hydraulic apparatus 1 further comprises a drainage section 25, which has been configured in the first operating stage I to accomplish a reduction in the volume of the liquid space 23 by moving the wall 19 and in the second operating stage II to release the wall 19 to enable an increase in the volume of the liquid space 23. Moreover, the hydraulic apparatus 1 has been arranged in the first operating stage I to return overflow oil to the hydraulic circulation 55 through a non-return valve 45 and in the second operating stage II to receive overflow oil from the hydraulic motor 49 through a second non-return valve 46.

The drainage section 25 comprises a cylindrical shell 2 and ends 3, 4 at both heads of the shell 2 and a movable piston 5 and piston rod 6 between the ends 3, 4 inside the cylindrical shell 2, connector 10. The connector 10 has been connected or is connectable to the hydraulic circulation 55 to allow the moving of the wall 19, enabling an increase in the volume of the liquid space 23, especially by pushing the movable piston (5) and/or piston rod (6) to avoid the movement of the wall (19). The drainage section 25 further comprises a connector 9, which has been connected or is connectable to the hydraulic circulation 55 to accomplish a reduction in the volume of the liquid space 23 by moving the wall 19, especially by pushing it with the piston 5 and/or piston rod 6. There are seals in the piston 5 between the piston 5 and the shell 2 of the drainage section 26. Moreover, there are seals in the wall 19 between the wall 19 and the shell of the tank section 25 as well as in the end 4 between the end 4 and the piston rod 6. The drainage section 25 is most advantageously a welded structure.

The tank section 26 comprises at least one connector 21, which has/have been connected or is/are connectable to the hydraulic circulation 55 in the first operating stage I to return overflow oil to the pressure circulation 55 through a non-return valve 45 and in the second operating stage II to receive overflow oil from the hydraulic motor 49 through a second non-return valve 46 as well as to make the counterpressure of the wall 19 of the air opening 22 constant.

The tank section 26 and drainage section 26 are most advantageously machined and welded structures. The tank section 25 is most preferably integrated into the drainage section 25. The drainage section 25 and tank section 26 are most preferably after one another in their longitudinal direction. In this case, the stroke length 15 of the piston 5 of the drainage section 25 has most advantageously been dimensioned so that the piston rod 6 pushes the wall 19 of the tank section 26 so that the wall 19 essentially drains the liquid space 23 of the tank section 26 from the overflow oil. The shell 2 of the drainage section 25 and the shell 16 of the tank section 26 are most preferably essentially concentric.

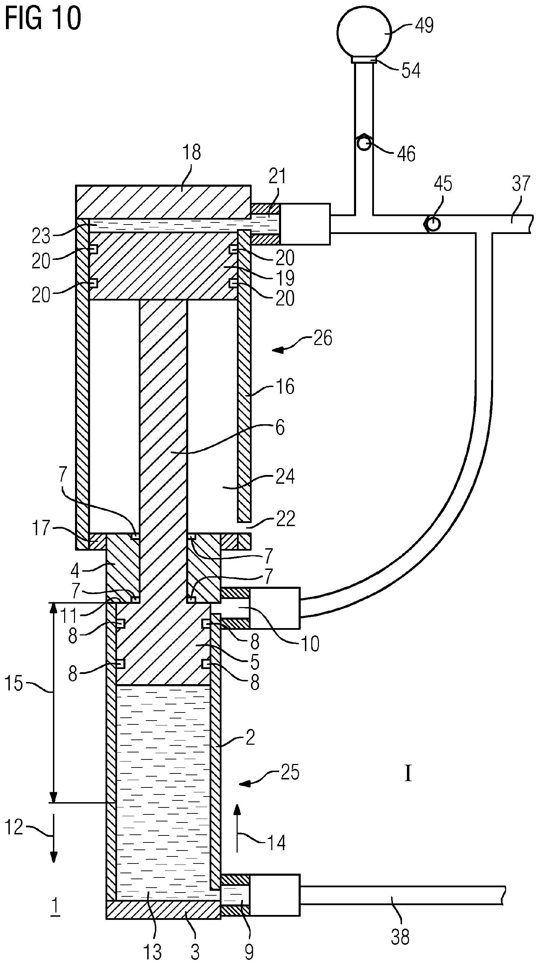

FIG 10 shows cross-section II - II of the hydraulic apparatus 1, which is in the second operating stage II, in other words when the pressure of the second pressure line 38 has filled the plus chamber 13 of the drainage section 26 through the connector 9 and pushed, by means of a plus movement 14, the piston 5 and further the piston rod 6 into contact with the wall 19 of the tank section 23, and pushed the wall 19 in front of it towards the end 18 of the tank section 23. As the wall 19 is being pushed towards the end 18, the overflow oil goes to the first pressure line 37. The hydraulic oil that was in the minus chamber 11 of the drainage section 25 has exited through the connector 10 to the first pressure line 37. The gas space 24 of the tank section 25, which gas space 24 had increased the volume, has been filled by air that has come through the air opening 22.

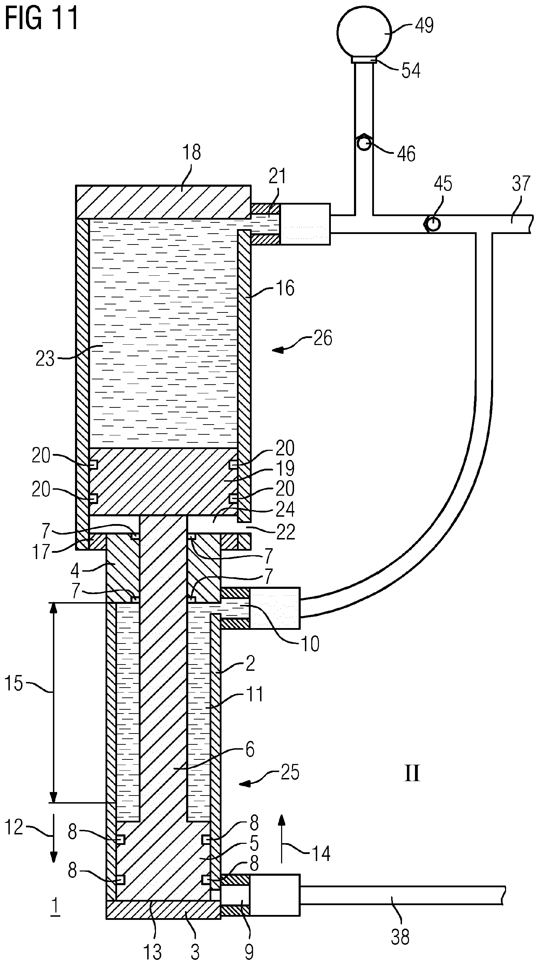

FIG 11 shows cross-section II - II of the hydraulic apparatus 1, which is in the final stage of the first operating stage I, in other words when the pressure of the first pressure line 37 has filled the minus chamber 11 through the connector 10 and pushed, by means of a minus movement 12, the piston 5 and piston rod 6 towards the end 3 of the drainage section 25, in which case the wall 19 of the tank section 25 has been able to move towards the end 17 and enabled the access of the overflow oil of the hydraulic motor 49 into the liquid space 23 of the tank section 25 through the first pressure line 37 and connector 21. The hydraulic oil of the plus chamber of the drainage section 26 has exited through the connector 9 to the second pressure line 38. Air has partially exited the gas space 24 of the tank section 25, which gas space 24 has lost some of its volume, through the air opening 22.

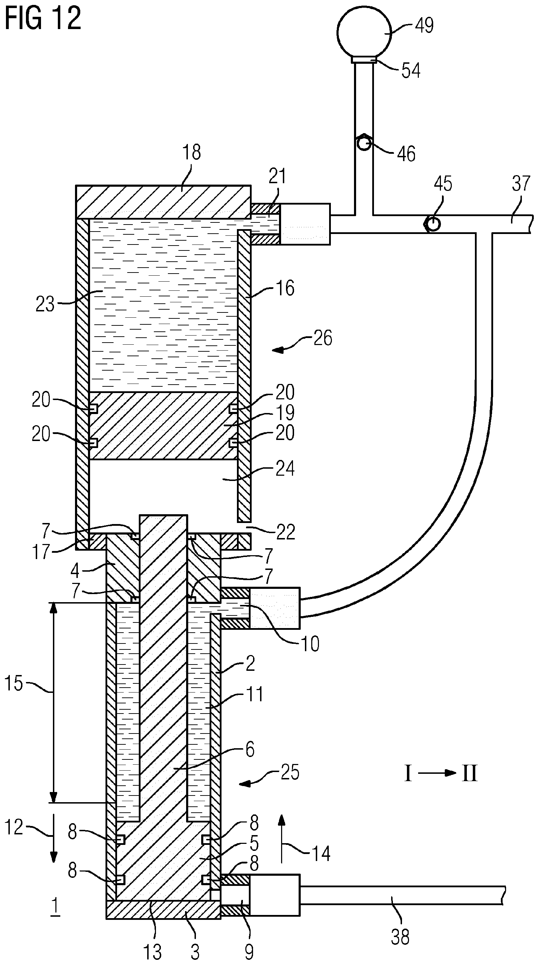

FIG 12 shows cross-section II - II of the hydraulic apparatus 1, which is in the first operating stage I, in other words when the pressure of the first pressure line 37 has filled the minus chamber 11 through the connector 10 and pushed the piston 5 and piston rod 6 towards the end 3 of the drainage section 25, whereby the wall 19 of the tank section 25 has been able to move towards the end 17 and enabled the partial access of the overflow oil of the hydraulic motor 49 into the liquid space 23 of the tank section 25 through the first pressure line 37 and connector 21. The hydraulic oil of the plus chamber of the drainage section 26 has exited through the connector 9 to the second pressure line 38. Air has partially exited the gas space 24, which has lost some of its volume, through the air opening 22.

### II: work device usable with pressure circulation and equipped with hydraulic motor

The drawing FIG 1 shows work device 100 usable with pressure circulation and equipped with a hydraulic motor, in other words the hydraulic system 29 of the saw grab shown in FIG 4. The work device 100 comprises i) a hydraulic circulation 55, which has a first pressure line 37 and a second pressure line 38. Moreover, the work device 100 has a hydraulic motor 49. The hydraulic motor 100 has most advantageously been connected or is connectable between the first pressure line 37 and the second pressure line 38. The hydraulic motor 100 has an overflow connection 54. The work device 100 further comprises a hydraulic apparatus 1 in accordance with the first aspect of the invention, which hydraulic apparatus 1 has been configured to receive overflow oil from the hydraulic motor 49 through a non-return valve 46 and return overflow oil to the pressure circulation 55 through a second non-return valve 45. The first pressure line 37 and the second pressure line 38 have most preferably been connected or are connectable to a hydraulic power unit 30.

The work device 100 can also comprise a number of grabs 104, 105 and at least one hydraulic cylinder 42, which has most advantageously been connected or is connectable to one of the two pressure lines 37, 38 to close the grabs 104, 105 and to the other pressure line 37, 38 to open the grabs 104, 105. The hydraulic cylinder 42 can further comprise a non-return valve 39, which has most preferably been connected or is connectable to the first pressure line 37.

The work device 100 can further comprise a body 101 and at least one hydraulic cylinder 43, which has most advantageously been connected or is connectable to the first pressure line 37 to turn the body 101 with respect to the arm 110 to the first position, especially essentially to an angle of 0°, and to the second pressure line 38 to turn the body 101 with respect to the boom 110 to the second position, especially essentially to an angle of 90°. The hydraulic cylinder 43 can further comprise pressure relief valves 40, 41, which have most advantageously been connected or are connectable in parallel to the second pressure line 38.

The hydraulic motor 49 of the work device 100 is most advantageously the motor of a hydraulically-operated chain saw 107. The work device 100 further comprises a hydraulic cylinder 52, which has most advantageously been connected or is connectable to the first pressure line 37 to turn the chain saw 107 to the cutting position and to the second pressure line 38 to return the chain saw 107 to the rest position. The hydraulic cylinder 52 can further comprise a pressure reducing valve / pressure relief valve 50, which has most advantageously been connected or is connectable to the first pressure line 37. The hydraulic cylinder 52 can further comprise a directional control valve 51, which has most advantageously been connected or is connectable both to the first pressure line 37 and to the second pressure line 38.

A chain lubrication unit 53 has most advantageously been arranged in connection with the chain saw 107, which chain lubrication unit 53 has most advantageously been connected or is connectable to the second pressure line 38. The chain lubrication unit 53 can further comprise a non-return valve 47, which has most advantageously been connected or is connectable to the first pressure line 37.

The hydraulic motor 49 can comprise a non-return valve 44, which has most advantageously been connected or is connectable to the second pressure line 38. The hydraulic motor 49 can further comprise a directional control valve 48, which has most advantageously been connected or is connectable to the first pressure line 37.

As stated above, the work device 100 is most advantageously a hydraulically-operated gripping device or grab intended for the collection and cutting of timber, the hydraulic motor 49 of which work device 100 is most preferably the motor of a hydraulically-operated chain saw 107.

The second operating stage II of the hydraulic apparatus 1 of the work device 100 is when the motor of the chain saw 107 is rotating, and the first operating stage I is when the gripping device or grab is being opened, in which case the motor of the chain saw 107 is not run.

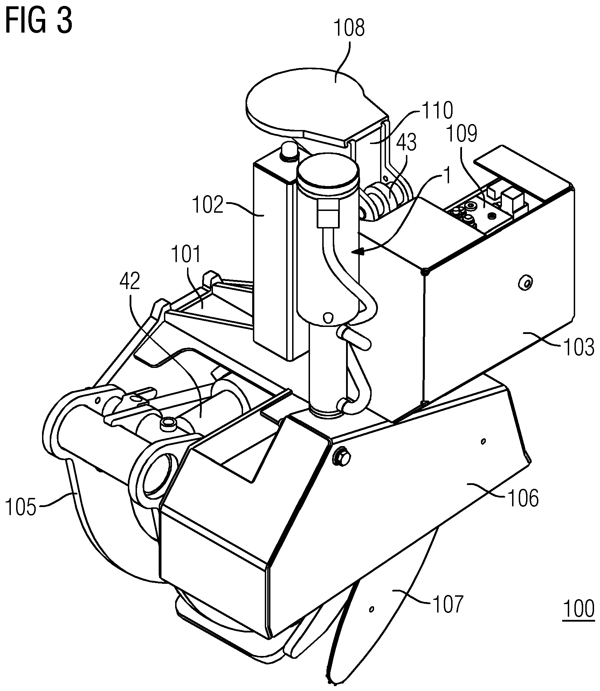

The drawings FIG 3 - 9 show one embodiment of the saw grab, where the work device 100 further comprises a body 101, at least two grabs 104, 105 articulated to the body 101, an arm 110 articulated to the body 101 and a work device mounting 108 fastened to the arm 110.

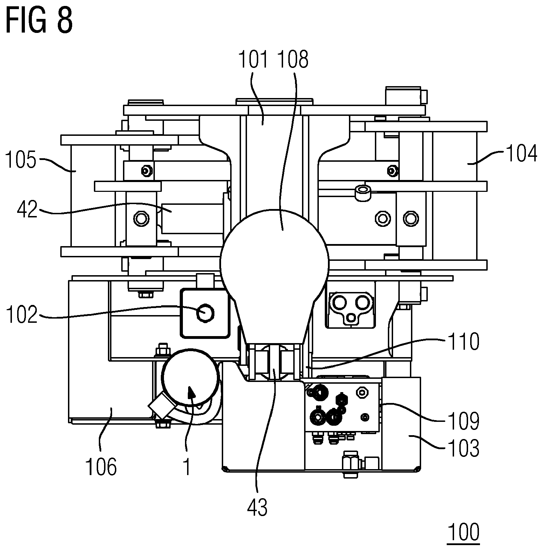

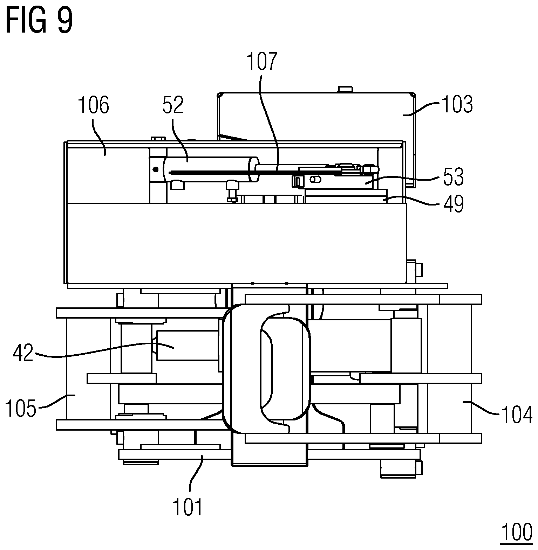

The drawing FIG 3 shows the work device 100 in a perspective view. The drawing FIG 8 shows the work device 100 viewed from above and FIG 9 viewed from below. The work device 100 can be fastened to a work machine, such as an excavator boom, by means of the work device mounting 108. The work device mounting 108 has most advantageously been fastened to the end of the arm 110 by welding. The arm 110 has been articulated to the body 101. The body 101 can turn with respect to the arm 110 most advantageously 0° - 90°. The turning of the body 101 most preferably takes place by means of a hydraulic cylinder 34. The hydraulic apparatus 1, the oil tank 102 of the chain lubrication unit 53 and the protective casing 103 of the valve blocks 109 have been fastened to the arm 110, in which case they do not turn with the body 101. The grabs 104 and 105 have been articulated to the body 101. The grabs 104 and 105 open and close by means of the hydraulic cylinder 42. The chain saw 107 has been articulated to the body 101. The chain saw 107 is in the rest position inside a chain guard 106. The chain guard 106, which has most advantageously been made as a welded structure, has been connected to the body 101.

The drawing FIG 4 shows the work device 100 viewed from the back. The grabs 104 and 105 seize the item, such as a tree trunk, by squeezing it with the closing grabs 104 and 105. The tree trunk is cut by bringing the chain saw 107 out of the chain guard 106 and by pressing it against the tree.

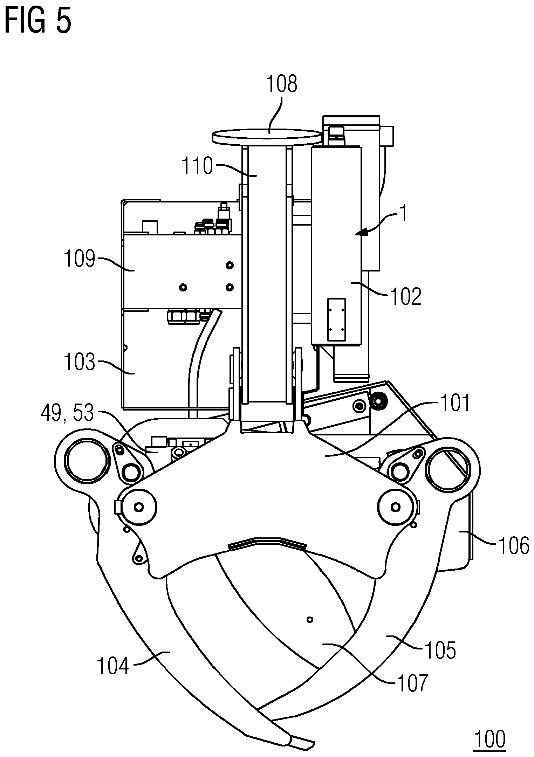

The drawing FIG 5 shows the work device 100 viewed from the front. The hydraulic motor 49 and the chain lubrication unit 53 have most advantageously been connected to the body and arranged so that the hydraulic motor 49 rotates the chain saw 107 and the chain lubrication unit lubricates the chain of the chain saw 107. It is possible that at least some of the valves have been combined into valve blocks 109 and located most advantageously in a protective casing 103 fastened to the arm 110. The hydraulic apparatus 1 has been connected to the arm 110 in the direction of the arm 110.

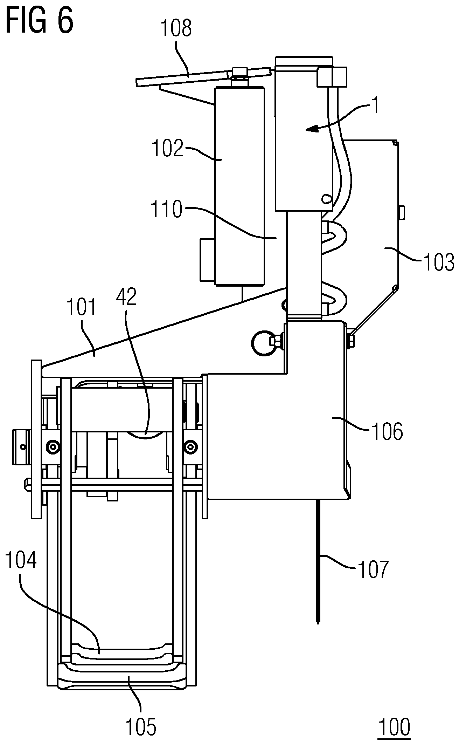

The drawing FIG 6 shows the work device 100 viewed from the right side. The chain saw 107 has most advantageously been located below the grabs 104 and 105, when the body 101 is turned to an angle of for example 90° with respect to the arm 110. The distance of the chain saw 107 from the grabs 104 and 105 is most advantageously 300 - 500 mm.

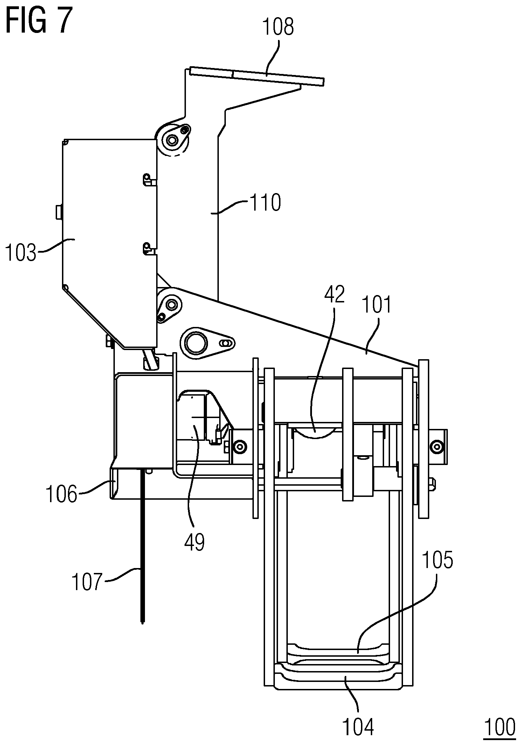

The drawing FIG 7 shows the work device 100 viewed from the left side. The hydraulic motor 49 is most advantageously at least partially inside the chain guard 106.

The invention should not be understood to be limited only by the below claims, but the invention is to be understood to include all their legal equivalents and the combinations of the embodiments presented.

### List of reference numbers used:

- I: first operating stage
- II: second operating stage
- 1: hydraulic apparatus
- 2: shell
- 3: end
- 4: end
- 5: piston
- 6: piston rod
- 7: piston seals
- 8: piston rod seals
- 9: connector
- 10: connector
- 11: minus chamber
- 12: minus movement
- 13: plus chamber
- 14: plus movement
- 15: stroke length
- 16: shell
- 17: end
- 18: end
- 19: wall
- 20: piston seals
- 21: connector
- 22: air opening
- 23: liquid space
- 24: gas space
- 25: drainage section
- 26: tank section
- 29: hydraulic system
- 30: hydraulic power unit
- 31: hydraulic pump
- 32: directional control valve
- 33: pressure relief valve
- 34: pressure relief valve
- 35: pressure relief valve
- 36: filter
- 37: first pressure line
- 38: second pressure line
- 39: non-return valve
- 40: pressure relief valve
- 41: pressure relief valve
- 42: hydraulic cylinder
- 43: hydraulic cylinder
- 44: non-return valve
- 45: non-return valve
- 46: non-return valve
- 47: non-return valve
- 48: directional control valve
- 49: hydraulic motor
- 50: pressure reducing valve / pressure relief valve
- 51: directional control valve
- 52: hydraulic cylinder
- 53: chain lubrication unit
- 54: overflow connection
- 55: hydraulic circulation
- 100: saw grab
- 101: body
- 102: oil tank
- 103: protective casing
- 104: grab (left)
- 105: grab (right)
- 106: chain guard
- 107: chain saw
- 108: work machine mounting
- 109: valve block
- 110: arm

## Claims

1. A work device (100) usable with pressure circulation and equipped with a hydraulic motor (49), comprising:
- a hydraulic circulation (55), which has a first pressure line (37) and a second pressure line (38);
- a hydraulic motor (49) connected between the first pressure line (37) and the second pressure line (38) and which has an overflow connection (54); and
**characterised in that** the work device (100) further comprises
- a hydraulic apparatus (1) for the receiving and returning to pressure circulation of overflow oil of the hydraulic motor, wherein the hydraulic apparatus (1) comprises:
- a tank section (26), which comprises an air-tight liquid space (23) that is in connection with at least one connector (21), the volume of which liquid space (23) is restricted by at least one movable wall (19); and
- a drainage section (25), which has been configured in a first operating stage (I) to accomplish a reduction in the volume of the liquid space (23) by moving the wall (19) and in a second operating stage (II) to release the wall (19) to enable an increase in the volume of the liquid space (23); and wherein:
- the hydraulic apparatus (1) has been arranged in the first operating stage (I) to return overflow oil to the hydraulic circulation (55) through a non-return valve (45) and in the second operating stage (II) to receive overflow oil from the hydraulic motor (49) through a second non-return valve (46);
whereby the hydraulic apparatus (1) has been configured to receive overflow oil from the hydraulic motor (49) through a non-return valve (46) and return overflow oil to the pressure circulation (55) through a second non-return valve (45).

2. A work device (100) according to claim 1, where the drainage section (25) comprises a cylindrical shell (2) and ends (3, 4) at both heads of the shell (2).

3. A work device (100) according to claim 2, where the drainage section (25) comprises a movable piston (5) and piston rod (6) between the ends (3, 4) inside the cylindrical shell (2).

4. A work device (100) according to any one of the preceding claims 1 - 3, where the drainage section (25) comprises a connector (10), which has been connected or is connectable to the hydraulic circulation (55) to allow the moving of the wall (19), enabling an increase in the volume of the liquid space (23), especially by pushing the movable piston (5) and/or piston rod (6) to avoid the movement of the wall (19).

5. A work device (100) according to any one of the preceding claims 1 - 4, where the drainage section (25) comprises a connector (9), which has been connected or is connectable to the hydraulic circulation (55) to accomplish a reduction in the volume of the liquid space (23) by moving the wall (19), especially by pushing it with the piston (5) and/or piston rod (6).

6. A work device (100) according to any one of the preceding claims 1 - 5, where the tank section (26) comprises at least one connector (21), which has/have been connected or is/are connectable to the hydraulic circulation (55) in the first operating stage (I) to return overflow oil to the pressure circulation (55) through a non-return valve (45) and in the second operating stage (II) to receive overflow oil from the hydraulic motor (49) through a second non-return valve (46).

7. A work device (100) according to any one of the preceding claims 1 - 6, where the tank section (26) comprises an air opening (22) to make the counterpressure of the wall (19) constant.

8. A work device (100) according to any one of the preceding claims, where the first pressure line (37) and the second pressure line (38) have been connected or are connectable to a hydraulic power unit (30).

9. A work device (100) according to any one of the preceding claims, which work device (100) comprises a number of grabs (104, 105) and at least one hydraulic cylinder (42), which has been connected or is connectable to one of the two pressure lines (37, 38) to close the grabs (104, 105) and to the other pressure line (37, 38) to open the grabs (104, 105).

10. A work device (100) according to any one of the preceding claims, which work device (100) comprises a body (101) and at least one hydraulic cylinder (43), which has been connected or is connectable to the first pressure line (37) to turn the body (101) with respect to the arm (110) to the first position, especially essentially to an angle of 0°, and to the second pressure line (38) to turn the body (101) with respect to the boom (110) to the second position, especially essentially to an angle of 90°.

11. A work device (100) according to any one of the preceding claims, where the hydraulic motor (49) is the motor of a hydraulically-operated chain saw (107) and where the work device further comprises a hydraulic cylinder (52), which has been connected or is connectable to the first pressure line (37) to turn the chain saw (107) to the cutting position and to the second pressure line (38) to return the chain saw (107) to the rest position.

12. A work device (100) according to any one of the preceding claims, which work device (100) is a hydraulically-operated gripping device or grab intended for the collection and cutting of timber and in which the hydraulic motor (49) is the motor of a hydraulically-operated chain saw (107).

13. A work device (100) according to claim 12, where the second operating stage (II) of the hydraulic apparatus (1) is when the motor of the chain saw (107) is rotating.

14. A work device (100) according to claim 12 or 13, where the first operating stage (I) of the hydraulic apparatus (1) is when the gripping device or grab is being opened, in which case the motor of the chain saw (107) is not run.

## Patentansprüche

1. Arbeitsgerät (100) verwendbar mit Druckkreislauf und ausgestattet mit einem Hydraulikmotor (49), das folgendes umfasst:
- einen Hydraulikkreislauf (55), der eine erste Druckleitung (37) und eine zweite Druckleitung (38) aufweist;
- einen Hydraulikmotor (49), verbunden zwischen der ersten Druckleitung (37) und der zweiten Druckleitung (38) und der eine Überlaufverbindung (54) aufweist; und
**dadurch gekennzeichnet, dass** das Arbeitsgerät (100) weiter folgendes umfasst
- eine Hydraulikvorrichtung (1) für die Aufnahme und Rückführung zum Druckkreislauf von Lecköl des Hydraulikmotors, in der die Hydraulikvorrichtung (1) folgendes umfasst:
- einen Tankbereich (26), der eine luftdichte Flüssigkeitskammer (23) umfasst, die mit mindestens einem Verbindungsstück (21) verbunden ist, das Volumen dieser Flüssigkeitskammer (23) durch mindestens eine bewegliche Wand (19) begrenzt ist; und
- einen Dränbereich (25), der so konfiguriert worden ist, dass er in einer ersten Arbeitsstufe (I) eine Verringerung im Volumen der Flüssigkeitskammer (23) durch Bewegen der Wand (19) erreicht und in einer zweiten Arbeitsstufe (II) die Wand (19) löst, um eine Vergrößerung des Volumens der Flüssigkeitskammer (23) zu ermöglichen; und in dem:
- die Hydraulikvorrichtung (1) so angeordnet worden ist, dass sie in der ersten Arbeitsstufe (I) Lecköl in den Hydraulikkreislauf (55) durch ein Rückschlagventil (45) zurückführt und in der zweiten Arbeitsstufe (II) Lecköl vom Hydraulikmotor (49) durch ein zweites Rückschlagventil (46) aufnimmt;
an dem die Hydraulikvorrichtung (1) so konfiguriert worden ist, dass sie Lecköl vom Hydraulikmotor (49) durch ein Rückschlagventil (46) aufnimmt und Lecköl in den Druckkreislauf (55) durch ein zweites Rückschlagventil (45) zurückführt.

2. Arbeitsgerät (100) nach Anspruch 1, wo der Dränbereich (25) eine zylindrische Hülse (2) und Enden (3, 4) an beiden Stirnseiten der Hülse (2) umfasst.

3. Arbeitsgerät (100) nach Anspruch 2, wo der Dränbereich (25) eine(n) beweglichen Kolben (5) und Kolbenstange (6) zwischen den Enden (3, 4) innerhalb der zylindrischen Hülse (2) umfasst.

4. Arbeitsgerät (100) nach einem der vorhergehenden Ansprüche 1 - 3, wo der Dränbereich (25) ein Verbindungsstück (10) umfasst, das an den Hydraulikkreislauf (55) gekoppelt worden ist oder gekoppelt werden kann, um die Bewegung der Wand (19) zu erlauben, was eine Vergrößerung im Volumen der Flüssigkeitskammer (23) ermöglicht, insbesondere durch Schieben des beweglichen Kolbens (5) und/oder Kolbenstange (6), um die Bewegung der Wand (19) zu vermeiden.

5. Arbeitsgerät (100) nach einem der vorhergehenden Ansprüche 1 - 4, wo der Dränbereich (25) ein Verbindungsstück (9) umfasst, das mit dem Hydraulikkreislauf (55) gekoppelt worden ist oder gekoppelt werden kann, um eine Verringerung im Volumen der Flüssigkeitskammer (23) durch Bewegen der Wand (19) zu erreichen, insbesondere durch Schieben derselben mit dem Kolben (5) und/oder der Kolbenstange (6).

6. Arbeitsgerät (100) nach einem der vorhergehenden Ansprüche 1 - 5, wo der Tankbereich (26) mindestens ein Verbindungsstück (21) umfasst, das/die in der ersten Arbeitsstufe (I) mit dem Hydraulikkreislauf (55) gekoppelt worden ist/sind oder gekoppelt werden kann/können, um Lecköl in den Druckkreislauf (55) durch ein Rückschlagventil (45) zurückzuführen und in der zweiten Arbeitsstufe (II) Lecköl vom Hydraulikmotor (49) durch ein zweites Rückschlagventil (46) aufzunehmen.

7. Arbeitsgerät (100) nach einem der vorhergehenden Ansprüche 1 - 6, wo der Tankbereich (26) eine Luftöffnung (22) umfasst, um einen konstanten Gegendruck der Wand (19) zu erreichen.

8. Arbeitsgerät (100) nach einem der vorhergehenden Ansprüche, wo die erste Druckleitung (37) und die zweite Druckleitung (38) an ein Hydraulikaggregat (30) gekoppelt worden sind oder gekoppelt werden können.

9. Arbeitsgerät (100) nach einem der vorhergehenden Ansprüche, wobei das Arbeitsgerät (100) eine Anzahl von Greifern (104, 105) und mindestens einen Hydraulikzylinder (42) umfasst, der mit einer der beiden Druckleitungen (37, 38) gekoppelt worden ist oder gekoppelt werden kann, um die Greifer (104, 105) zu schließen und an die andere Druckleitung (37, 38), um die Greifer (104, 105) zu öffnen.

10. Arbeitsgerät (100) nach einem der vorhergehenden Ansprüche, wobei das Arbeitsgerät (100) einen Körper (101) und mindestens einen Hydraulikzylinder (43) umfasst, der mit der ersten Druckleitung (37) gekoppelt worden ist oder gekoppelt werden kann, um den Körper (101) bezogen auf den Arm (110) in die erste Position zu drehen, insbesondere im Wesentlichen in einen Winkel von 0° und an die zweite Druckleitung (38), um den Körper (101) bezogen auf die Stütze (110) in die zweite Position zu drehen, insbesondere im Wesentlichen in einen Winkel von 90°.

11. Arbeitsgerät (100) nach einem der vorhergehenden Ansprüche, wo der Hydraulikmotor (49) der Motor einer hydraulisch betriebenen Kettensäge (107) ist und wo das Arbeitsgerät weiter einen hydraulischen Zylinder (52) umfasst, der an die erste Druckleitung (37) gekoppelt worden ist oder gekoppelt werden kann, um die Kettensäge (107) in die Schneidposition zu drehen und an die zweite Druckleitung (38), um die Kettensäge (107) in die Ruheposition zurückzudrehen.

12. Arbeitsgerät (100) nach einem der vorhergehenden Ansprüche, wobei das Arbeitsgerät (100) ein hydraulisch betriebenes/r Greifwerkzeug oder Greifer ist, der für das Zusammentragen und Schneiden von Nutzholz gedacht ist und in dem der Hydraulikmotor (49) der Motor einer hydraulisch betriebenen Kettensäge (107) ist.

13. Arbeitsgerät (100) nach Anspruch 12, wo sich die Hydraulikvorrichtung (1) in der zweiten Arbeitsstufe (II) befindet, wenn der Motor der Kettensäge (107) rotiert.

14. Arbeitsgerät (100) nach Anspruch 12 oder 13, wo sich die Hydraulikvorrichtung (1) in der ersten Arbeitsstufe (I) befindet, wenn das Greifwerkzeug oder der Greifer geöffnet wird, wobei dann der Motor der Kettensäge (107) nicht läuft.

## Revendications

1. Dispositif de travail (100) utilisable avec une circulation de pression et équipé d'un moteur hydraulique, comprenant :
- une circulation hydraulique (55) présentant une première ligne de pression (37) et une deuxième ligne de pression (38) ;
- un moteur hydraulique (49) connecté entre la première ligne de pression (37) et la deuxième ligne de pression (38) et raccordé à un trop-plein (54) ; et
**caractérisé en ce que** ledit dispositif de travail (100) comprend également
- un dispositif hydraulique (1) pour la réception et le retour à la circulation de la pression du trop-plein d'huile du moteur hydraulique, dans lequel ledit dispositif hydraulique (1) comprend :
- une section de réservoir (26), comprenant un espace de liquide étanche (23) connecté à au moins un connecteur (21), le volume dudit espace de liquide (23) étant limité par au moins une paroi mobile (19) ; et
- une section de drainage (25) qui a été configurée au cours d'une première étage de fonctionnement (I) pour effectuer une réduction du volume de l'espace de liquide (23) en déplaçant la paroi (19) et dans une deuxième étape de fonctionnement (II) pour libérer la paroi (19) afin de permettre une augmentation du volume du l'espace de liquide (23) ; et dans lequel :
- un dispositif hydraulique (1) a été agencé lors de la première étape de fonctionnement (I) pour renvoyer le trop-plein d'huile dans la circulation hydraulique (55) à travers une valve antiretour (45) et lors de la deuxième étape de fonctionnement (II) pour recevoir le trop-plein d'huile venant du moteur hydraulique (49) à travers une deuxième valve antiretour (46) ;
le dispositif hydraulique (1) ayant été configuré pour recevoir le trop-plein d'huile du moteur hydraulique (49) à travers une valve antiretour (46) et pour renvoyer le trop-plein d'huile dans la circulation hydraulique (55) à travers une deuxième valve antiretour (45).

2. Dispositif de travail (100) selon la revendication 1, dans lequel la section de drainage (25) comprend une enveloppe cylindrique (2) et des embouts (3, 4) aux deux extrémités de l'enveloppe (2).

3. Dispositif de travail (100) selon la revendication 2, dans lequel la section de drainage (25) comprend un piston mobile (5) et une tige de piston (6) entre les embouts (3, 4) à l'intérieur de l'enveloppe cylindrique (2).

4. Dispositif de travail (100) selon l'une quelconque des revendications précédentes 1 à 3, dans lequel la section de drainage (25) comprend un connecteur (10), connecté ou connectable à la circulation hydraulique (55) pour permettre le déplacement de la paroi (19), permettant d'augmenter le volume de l'espace de liquide (23), en particulier par poussée du piston mobile (5) et/ou de la tige de piston (6) afin d'éviter le mouvement de la paroi (19).

5. Dispositif de travail (100) selon l'une quelconque des revendications précédentes 1 à 4, dans lequel la section de drainage (25) comprend un connecteur (10), connecté ou connectable à la circulation hydraulique (55) pour permettre de réduire le volume de l'espace de liquide (23) en déplaçant la paroi (19), en particulier en la poussant au moyen du piston mobile (5) et/ou de la tige de piston (6).

6. Dispositif de travail (100) selon l'une quelconque des revendications précédentes 1 à 5, dans lequel la section de réservoir (26) comprend au moins un connecteur (10), connecté ou connectable à la circulation hydraulique (55) lors de la première étape de fonctionnement (I) pour renvoyer le trop-plein d'huile dans la circulation hydraulique (55) à travers une valve antiretour (45) et lors de la deuxième étape de fonctionnement (II) pour recevoir le trop-plein d'huile venant du moteur hydraulique (49) à travers une deuxième valve antiretour (46).

7. Dispositif de travail (100) selon l'une quelconque des revendications précédentes 1 à 6, dans lequel la section de réservoir (26) comprend une entrée d'air (22) permettant d'assurer la contrepression constante exercée par la paroi (19).

8. Dispositif de travail (100) selon l'une quelconque des revendications précédentes, dans lequel la première ligne de pression (37) et la seconde ligne de pression (38) sont connectées ou connectables à une unité de puissance hydraulique (30).

9. Dispositif de travail (100) selon l'une quelconque des revendications précédentes, lequel dispositif de travail (100) comprend plusieurs grappins (104, 105) et au moins un cylindre hydraulique (42), lequel est connecté ou connectable à l'une des deux lignes de pression (37, 38) pour fermer les grappins (104, 105) et à l'autre ligne de pression (37, 38) pour ouvrir les grappins (104, 105).

10. Dispositif de travail (100) selon l'une quelconque des revendications précédentes, lequel dispositif de travail (100) comprend un corps (101) et au moins un cylindre hydraulique (43) connecté ou connectable à la première ligne de pression (37) pour faire pivoter le corps (101) par rapport au bras (110) dans la première position, en particulier à un angle de 0°, et à la deuxième ligne de pression (38) pour faire pivoter le corps (101) par rapport à la perche (110) dans la seconde position, en particulier à un angle de 90°.

11. Dispositif de travail (100) selon l'une quelconque des revendications précédentes, dans lequel le moteur hydraulique (49) est le moteur d'une scie à chaîne hydraulique (107), ledit dispositif de travail comprenant par ailleurs un cylindre hydraulique (52) connecté ou connectable à la première ligne de pression (37) pour faire pivoter la scie à chaîne (107) en position de coupe et à la deuxième ligne de pression (38) pour replacer la scie à chaîne (107) en position de repos.

12. Dispositif de travail (100) selon l'une quelconque des revendications précédentes, dans lequel ledit dispositif de travail (100) est un dispositif de préhension hydraulique ou un grappin destiné à la collecte et à la coupe de bois, et dans lequel le moteur hydraulique (49) est le moteur d'une scie à chaîne hydraulique (107).

13. Dispositif de travail (100) selon la revendication 12, dans lequel la rotation du moteur de la scie à chaîne constitue la deuxième étape de fonctionnement (II) du dispositif hydraulique (1).

14. Dispositif de travail (100) selon la revendication 12 ou la revendication 13, dans lequel la première étape de fonctionnement (I) du dispositif hydraulique (1) correspond à l'ouverture du dispositif de préhension ou du grappin, auquel cas le moteur de la scie à chaîne (107) ne fonctionne pas.
